# EUROPÄISCHE PATENTANMELDUNG

(11) **EP 1 443 489 A2**
(43) Veröffentlichungstag der Anmeldung: **04.08.2004**
(21) Anmeldenummer: 03027491.4
(22) Anmeldetag: 01.12.2003
(51) Int. Cl.: G09G 5/00, G06F 3/14

(54) **Computersystem sowie Verfahren zur Übertragung von Bilddaten**

(30) Priorität: 02.12.2002 DE 10256216
(71) Anmelder: Fujitsu Siemens Computers GmbH, 80807 München (DE)
(72) Erfinder: Petz, Peter, 86853 Langerringen (DE); Polczynski, Ingo, 86316 Friedberg (DE); Bässler, Erwin, 86343 Königsbrunn (DE)
(74) Vertreter: Epping Hermann & Fischer

(57) **Zusammenfassung**

Die Erfindung betrifft ein Computersystem zur Übertragung von Bilddaten von einer Recheneinheit (1) an eine Anzeigevorrichtung (2), wobei die Anzeigevorrichtung (2) Mittel (3) mit der Funktionalität einer Grafikkarte aufweist.

Durch die Erfindung können die Bilddaten digital übertragen werden und werden erst in der Anzeigevorrichtung (2) durch die Mittel (3) für die Anzeige aufbereitet.

## Beschreibung

Die Erfindung betrifft ein Computersystem mit einer Recheneinheit und einer Anzeigevorrichtung sowie auch ein Verfahren zur Übertragung von Bilddaten von einer Recheneinheit an eine Anzeigevorrichtung.

Bisher ist es bekannt, die Bilddaten im Computer über eine Grafikkarte aufzubereiten und die aufbereiteten Bilddaten über eine Standardschnittstelle an einen Monitor weiterzuleiten. Dies erfolgt in der Regel in analoger Art und Weise, wobei die Grafikkarte ein HSync- und ein VSync-Signal sowie drei Videosignale für die Farben Rot, Grün und Blau aussendet, welche dann über die Standardschnittstelle und ein Standard-VGA-Kabel an den Monitor weitergeleitet werden.

Bei LCD- bzw. Plasmamonitoren werden die analogen Signale wieder aufwendig digitalisiert, um dann wieder in digitaler Form angezeigt werden zu können.

TFT-Bildschirme nach dem DVI, P&D oder DVP Standard weisen einen digitalen Eingang auf. Die Computer können bei diesen Geräten mit einer Grafikkarte ausgestattet werden, welche die Signale digital über ein spezielles digitales Übertragungskabel an den TFT-Monitor überträgt.

Desweiteren ist aus der DE 100 43 112 A1 ein System bekannt, bei dem die Übertragung der Bilddaten von einem Computer an einen Tablet-PC in digitaler Weise und schnurlos erfolgt. Der Tablet-PC dient dazu, um in der näheren Umgebung des Computers schnurlos auf die Daten des Computers zugreifen zu können.

Bei dem in dieser Druckschrift beschriebenen System bzw. Verfahren werden die von der Grafikkarte bzw. dem Videocontroller generierten Daten übertragen, wobei eine schnurlose Datenübertragung dadurch ermöglicht wird, daß nur Veränderungen in den Bilddaten übertragen werden.

Dieses System ermöglicht eine geringe Datenübertragungsrate zwischen Recheneinheit und Anzeigegerät, jedoch ist es relativ aufwendig, da sowohl in der Recheneinheit als auch in der Anzeigeeinheit, hier dem Tablet-PC, viel Elektronik notwendig ist, um den Datenabgleich bzw. die Veränderungen zu übermitteln und diese mit dem vorherigen Bild zum Gesamtbild zusammenzusetzen.

Der Erfindung liegt daher die Aufgabe zugrunde, ein Computersystem bzw. ein Verfahren für eine vereinfachte Datenübertragung zwischen Recheneinheit und Anzeigevorrichtung vorzuschlagen.

Die Aufgabe wird bezüglich dem Computersystem erfindungsgemäß dadurch gelöst, daß die Anzeigevorrichtung Mittel mit der Funktionalität einer Grafikkarte aufweist.

Bezüglich dem Verfahren wird die Aufgabe dadurch gelöst, daß die Bilddaten digital in die Anzeigevorrichtung übertragen werden und dort erst durch Mittel, die der Funktionalität einer Grafikkarte entsprechen, aufbereitet werden.

Das erfindungsgemäße System bzw. Verfahren hat den Vorteil, daß keine Datenaufbereitung im Computersystem mehr erfolgen muß und somit die digitalen Bilddaten, die in der Regel von der Grafikkarte im Slot am Motherboard abgegriffen werden, direkt übertragen werden können.

Zum Aussenden benötigt die Recheneinheit lediglich einen Transmitter und zum Empfangen die Anzeigevorrichtung einen Receiver.

Die digitale Übertragung der Bilddaten hat den Vorteil, daß diese problemlos verschlüsselt werden können, wobei hierzu die Recheneinheit vorteilhafterweise einen Coder in der Regel in der Form eine Programmes wie MPEG oder DVD und die Anzeigevorrichtung einen Decoder aufweist. Durch eine zusätzliche Verschlüsselung sind die Bilddaten abhör- bzw. abgreifsicher, das für die Übertragung in einem Netzwerk bzw. bei einer schnurlosen Übertragung von großem Vorteil ist.

Desweiteren ist an dem erfindungsgemäßen Computersystem bzw. Verfahren sehr vorteilhaft, daß sich die digitalen Bilddaten ohne weiteres komprimieren lassen, so daß sie auch schnurlos übertragbar sind. Als schnurlose Übertragung kommen z.B. Wireless LAN (Local Area Network) oder Bluetooth in Frage.

Ein weiterer Vorteil dieses Computersystems ist, daß sich die Bilddaten auch nur auf einer Leitung z.B. auf Fire Wire oder über USB übertragen lassen, da die Aufbereitung der Bilddaten erst im Anzeigegerät erfolgt. Die digitale Übertragung der Bilddaten unterliegt weniger EMV-Problemen, wie z.B. häufig durch Handys in der Nähe von Bildschirmen beobachtet werden kann.

Nachfolgend wird die Erfindung anhand eines in der Zeichnung dargestellten Ausführungsbeispieles näher erläutert.

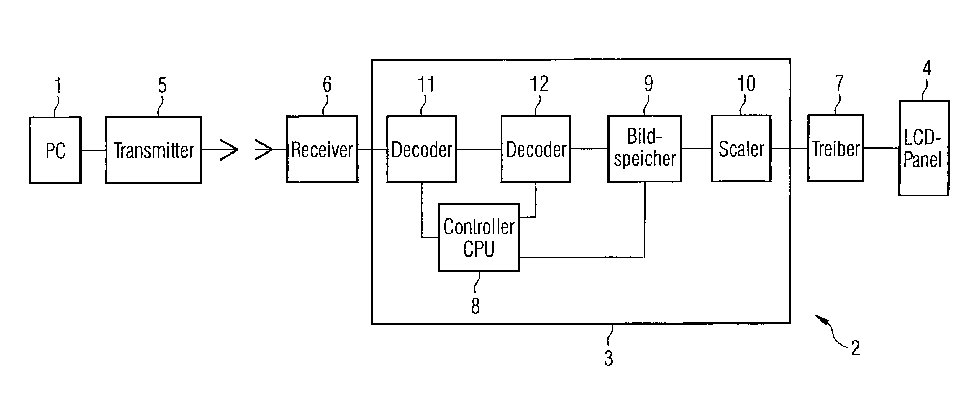

In den Zeichnungen zeigt die Figur 1 eine schematische Darstellung zur Übertragung von Bilddaten.

Figur 1 zeigt schematisch die Übertragung von Bilddaten von einer Recheneinheit 1 an eine Anzeigevorrichtung 2. Die Anzeigevorrichtung 2 umfaßt Mittel 3, welche der Funktionalität einer Grafikkarte entsprechen, und ein LCD-Panel 4 zum Anzeigen der Bilddaten.

Die Recheneinheit 1, im dargestellten Ausführungsbeispiel ein PC, sendet über einen Transmitter 5 die Daten aus, welche ein Receiver 6, der mit der Anzeigevorrichtung 2 verbunden ist, empfängt. Sowohl der Transmitter 5 als auch der Receiver 6 können jeweils in der Recheneinheit bzw. in der Anzeigevorrichtung integriert sein oder auch nur über Fire Wire oder USB mit den Geräten verbunden sein.

Die vom Receiver 6 empfangenen Bilddaten werden über die Mittel 3, welche einer Grafikkarte entsprechen, aufbereitet und danach über einen Treiber 7 auf das LCD-Panel 4 übertragen.

Die Mittel 3, welche die Funktionalität einer Grafikkarte aufweisen, umfassen einen Controller oder eine CPU 8, einen Bildspeicher 9 sowie einen Scaler 10.

Durch das dargestellte Verfahren werden die Bilddaten durchgängig in digitaler Form verarbeitet und erst am Schluß bei der Ansteuerung der einzelnen Bildpunkte in der Anzeige findet bei CRT-Monitoren eine Digital-Analog-Wandlung statt. Dadurch können weitgehend Störungen vermieden werden. Bei TFTund LCD-Displays kann eine Digital-Analog-Wandlung entfallen.

Zudem ist es möglich, die Bilddaten zu verschlüsseln. Hierzu ist z.B. in der Recheneinheit 1 ein Programm zur Datenverschlüsselung vorgesehen und in der Anzeigevorrichtung 2 ein Data Decoder 11 zur Decodierung der verschlüsselten Bilddaten.

Durch die Verschlüsselung der Bilddaten ist eine erhöhte Abhörsicherheit gewährleistet.

Zudem sind mit dem neuen Verfahren bzw. neuen System durch Datenübermittlung mit Adressen neue Anwendungsmöglichkeiten wie Parallelbetrieb vieler Monitore an einem PC oder gezielte Ansteuerung einzelner Monitore von einem PC aus möglich, wie es auf dem Schulungsbereich gewünscht wird.

Desweiteren können in der Recheneinheit 1 die Bilddaten durch Programme wie MPEG, DVD, CODEC drastisch komprimiert werden, so daß die Übertragung der Bilddaten auf Medien, wie z.B. Fire Wire, USB, Wireless LAN und Bluetooth ohne weiteres erfolgen kann. Eine Komprimierung über CODEC erzielt eine Datenreduzierung im Verhältnis 1:150 und eine Komprimierung wie sie bei Camcordern eingesetzt wird 1:2265. Z.B. erlaubt Fire Wire eine Übertragungsrate von 400 MBits/Sek, USB 2.0 480 MBits/Sek, USB 1.1 12 MBits/Sek, Wireless LAN 11 MBits/Sek bei Version 802., wobei Neuentwicklungen bis zu 54 MBits/Sek bei Wireless LAN ermöglichen, Bluetooth 1 MBits/Sek und DVD CODEC 40 MBits/Sek.

Nimmt man eine Auflösung von 1024 x 768 Bildpunkten bei 3 mal 8-Bit Farbtiefe, so kommt man bei einer Komprimierung, wie sie bei Camcordern eingesetzt wird, mit einem Verhältnis von 1:2265 auf eine Datenübertragungsrate von 16 MBits/Sek.

Bei dieser Auflösung wäre problemlos bei der zu erwartenden Neuentwicklung von Wireless LAN (54 MBits/Sek) eine schnurlose Übertragung möglich. Ebenso kann die Übertragung über Fire Wire oder USB 2.0 erfolgen.

Will man eine Auflösung von 800 x 600 bei bei 3 mal 8-Bit Farbtiefe, so beträgt die Datenrate bei einer Komprimierung, wie sie beim Camcorder eingesetzt wird, 9,77 MBits/Sek, so daß bereits bei der Version 802.11 B von Wireless LAN, welche 11 MBits/Sek erlaubt, eine schnurlose Datenübertragung möglich wäre.

Die Recheneinheit 1 weist zur Komprimierung der Bilddaten hierzu vorzugsweise einen Programm zur Komprimierung auf und in der Anzeigevorrichtung 2 ist hierzu vorzugsweise ein Decoder 12 für die komprimierten Bilddaten vorgesehen.

Die Elemente Daten Decoder 9 zur Aufhebung der Verschlüsselung, der Decoder 12 für die Entkomprimierung, der Bildspeicher 9, der Scaler 10 sowie der Controller bzw. die CPU 8 können alle in einem einzigen Chip integriert werden.

Das Gesamtkonzept erlaubt somit auf einfachste Art und Weise die Übertragung der Bilddaten vom PC bzw. der Recheneinheit 1 an eine Anzeigevorrichtung 2, wobei in der Recheneinheit 1 auf eine Grafikkarte oder einen Videocontroller verzichtet werden kann, und diese Funktionalität in den Mitteln 3, welche der Funktionalität einer Grafikkarte entsprechen in der Anzeigvorrichtung 2 vorgesehen sind. Da hierzu bereits in einem TFT-Monitor einzelne Komponenten, wie der Bildspeicher 9, Controller 8 bereits vorhanden sind, ist die Verlagerung Funktionalität der Grafikkarte von der Recheneinheit 1 auf die Anzeigevorrichtung 2 im wesentlichen kostenneutral bzw. sogar günstiger als wie der Einbau einer Grafikkarte in der Recheneinheit 1. Die Mittel 3, welche der Funktionalität einer Grafikkarte entsprechen, können direkt in der Anzeigevorrichtung integriert sein oder ebenso wie bei einem PC in einen entsprechenden Slot auf einer Platine in der Anzeigevorrichtung 2 eingesteckt werden.

Die Vorteile in der Lösung bestehen wie oben erwähnt darin, daß die Übertragung der Bilddaten in digitaler Form erfolgt, und somit Störungen auf der Übertragungsstrecke weitgehend ausgeräumt sind, die Daten ohne weiteres abhörsicher verschlüsselt werden können und ebenso auch komprimiert werden können, so daß die Übertragung auf nur einer Signalleitung oder auch schnurlos erfolgen kann.

Auch ist eine Anwendung bei Notebooks mit abnehmbarer Anzeige möglich. Abnehmbare Anzeigen bei Notebooks werden zum Beispiel zum Auflegen der Anzeige auf Tageslichprojektoren zur Darstellung des Inhaltes der Anzeige verwendet.

### Bezugszeichenliste

- 1: Recheneinheit
- 2: Anzeigevorrichtung
- 3: Mittel
- 4: LCD-Panel
- 5: Transmitter
- 6: Receiver
- 7: Treiber
- 8: CPU
- 9: Framebuffer oder Bildspeicher
- 10: Scaler
- 11: Decoder
- 12: Decoder

## Patentansprüche

1. Computersystem mit einer Recheneinheit (1) und einer Anzeigevorrichtung (2),
**dadurch gekennzeichnet, daß**
die Anzeigevorrichtung (2) Mittel (3) mit der Funktionalität einer Grafikkarte aufweist.

2. Computersystem nach Anspruch 1,
**dadurch gekennzeichnet, daß**
die Recheneinheit (1) einen Transmitter (5) zur Übertragung und die Anzeigevorrichtung (2) ein Receiver (6) zum Empfangen der Bilddaten aufweist.

3. Computersystem nach Anspruch 1 oder 2,
**dadurch gekennzeichnet, daß**
die Recheneinheit Mittel zur Verschlüsselung der Bilddaten und die Anzeigevorrichtung einen Decoder (11) zur Entschlüsselung der Bilddaten aufweist.

4. Computersystem nach einem der Ansprüche 1 bis 3,
**dadurch gekennzeichnet, daß**
die Recheneinheit (1) Mittel zum Komprimieren der Bilddaten und die Anzeigvorrichtung (2) einen Decoder (12) zum Dekomprimieren der Bilddaten aufweist.

5. Computersystem nach einem der Ansprüche 1 bis 4,
**dadurch gekennzeichnet, daß**
die Bilddaten schnurlos übertragbar sind.

6. Computersystem nach einem der Ansprüche 1 bis 4,
**dadurch gekennzeichnet, daß**
die Bilddaten auf nur einer Leitungsverbindung/Kanal übertragbar sind.

7. Verfahren zum Übertragen von Bilddaten über eine Recheneinheit (1) an eine Anzeigevorrichtung (2),
**dadurch gekennzeichnet, daß**
die Bilddaten digital übertragen werden und in der Anzeigevorrichtung mit Mitteln (3), die der Funktion einer Grafikkarte entsprechen, aufbereitet werden.

8. Verfahren nach Anspruch 7,
**dadurch gekennzeichnet, daß**
die Bilddaten für die Übertragung komprimiert und verschlüsselt werden.

9. Verfahren nach Anspruch 7 oder 8,
**dadurch gekennzeichnet, daß**
die Übertragung der Bilddaten auf nur einer Leitungsverbindung oder schnurlos erfolgt.
